(19) 

**Europäisches Patentamt**
**European Patent Office**
**Office européen des brevets**

(11)  **EP 4 601 173 A1**

(12)  **EUROPEAN PATENT APPLICATION**

(43) Date of publication:
    **13.08.2025   Bulletin 2025/33**

(51) International Patent Classification (IPC):
    $H02M\ 1/00^{(2006.01)}$   $H02M\ 1/38^{(2007.01)}$
    $H02M\ 3/00^{(2006.01)}$   $H02M\ 3/335^{(2006.01)}$

(21) Application number: 25156289.8

(22) Date of filing: **06.02.2025**

(52) Cooperative Patent Classification (CPC):
    **H02M 3/01; H02M 1/0058; H02M 1/38;**
    **H02M 3/33584;** Y02B 70/10

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH MA MD TN**

(30) Priority:  **08.02.2024   CN 202410176464**

(71) Applicant: **Solax Power Network**
    **Technology (Zhejiang) Co., Ltd.**
    **Hangzhou, Zhejiang 311500 (CN)**

(72) Inventors:
    • **LI, Yanlong**
      **Hangzhou 311500 (CN)**
    • **ZHANG, Chunxu**
      **Hangzhou 311500 (CN)**
    • **YANG, Yang**
      **Hangzhou 311500 (CN)**
    • **SUN, Chuangchuang**
      **Hangzhou 311500 (CN)**
    • **CHEN, Ke**
      **Hangzhou 311500 (CN)**

(74) Representative: **Murgitroyd & Company**
    **165-169 Scotland Street**
    **Glasgow G5 8PL (GB)**

(54)  **CONTROL METHOD FOR DUAL ACTIVE BRIDGE CONVERTER, CONTROLLER, AND DUAL ACTIVE BRIDGE CONVERTER**

(57)    The present application provides a control method for a dual active bridge converter, a controller, and a dual active bridge converter. The control method includes: calculating an input voltage of a second active bridge to form a first formula of the input voltage of the second active bridge with respect to an external phase shift angle; calculating an output voltage of a first active bridge to form a second formula; obtaining, based on the first formula and the second formula, a functional relationship formula of a current effective value for a resonant cavity with respect to an external phase shift angle; determining a first boundary range of the external phase shift angle based on the functional relationship formula of the current effective value for the resonant cavity with respect to the external phase shift angle; and outputting a first drive signal and a second drive signal according to the first boundary range of the external phase shift angle.

**Description**

**TECHNICAL FIELD**

This application relates to the field of power technologies, and in particular, to a control method for a dual active bridge converter, a controller, and a dual active bridge converter.

**BACKGROUND**

With the development of new energy industry, isolated bidirectional direct current/direct current/DC (DC/DC) converters are increasingly widely used in electric vehicles, energy storage inverters and other fields. In these fields, there is always a requirement of ultra-wide voltage gain range, which poses great challenges to efficiency and power density of a system.

Currently, in a mainstream solution of an isolated bidirectional DC/DC converter, a two-stage DC/DC converter is used. The two-stage structure can effectively extend a voltage gain range. However, system efficiency is difficult to improve, a quantity of components is relatively large, and design costs are increased. In addition, in a single-stage DC/DC converter, a single-phase dual active bridge converter is used, and its control method is easy to implement. However, a current ripple is large in high-power applications, and a larger volume of a filter capacitor is usually required, which makes it difficult to increase power density.

**SUMMARY**

To solve a problem in a conventional technology, the present application provides a control method for a dual active bridge converter, a controller, and a dual active bridge converter.

The present application provides a control method for a dual active bridge converter, where the dual active bridge converter includes a first active bridge, a resonant cavity, and a second active bridge that are electrically connected in sequence, and the method includes:

calculating an input voltage of the second active bridge to form a first formula of the input voltage of the second active bridge with respect to an external phase shift angle, where the external phase shift angle is an angular difference between a first drive signal for driving the first active bridge and a second drive signal for driving the second active bridge;

calculating an output voltage of the first active bridge to form a second formula;

obtaining, based on the first formula and the second formula, a functional relationship formula of a current effective value for the resonant cavity with respect to the external phase shift angle;

determining a first boundary range of the external phase shift angle based on the functional relationship formula of the current effective value for the resonant cavity with respect to the external phase shift angle; and

outputting the first drive signal and the second drive signal according to the first boundary range of the external phase shift angle.

In an embodiment, the calculating the input voltage of the second active bridge to form the first formula of the input voltage of the second active bridge with respect to the external phase shift angle includes:

performing Fourier transform on the input voltage of the second active bridge to form the first formula of the input voltage of the second active bridge with respect to the external phase shift angle and a voltage gain, where the voltage gain is an amplification multiple of an output voltage of the second active bridge relative to an input voltage of the first active bridge;

the calculating the output voltage of the first active bridge to form the second formula includes:

performing Fourier transform on the output voltage of the first active bridge to form a second formula of the output voltage of the first active bridge with respect to a dead time, where the dead time is an interlock delay time between an upper switch transistor and a lower switch transistor of any phase bridge arm of the first active bridge; and

the obtaining, based on the first formula and the second formula, the functional relationship formula of the current effective value for the resonant cavity with respect to the external phase shift angle includes:

determining, based on the first formula and the second formula, the functional relationship formula of the current effective value for the resonant cavity with respect to the external phase shift angle, the voltage gain, and the dead time.

In an embodiment, the determining, based on the first formula and the second formula, the functional relationship formula of the current effective value for the resonant cavity with respect to the external phase shift angle, the voltage gain, and the dead time includes:

obtaining, based on the first formula and the second formula, a third formula of current for the resonant cavity with respect to the external phase shift angle, the voltage gain, the dead time, and a load impedance;

obtaining, based on the third formula, a fourth formula of the current effective value for the resonant cavity with respect to the external phase shift angle, the voltage gain, the dead time, and the load impedance;

obtaining, based on the second formula and the third formula, a fifth formula of an average output current of the second active bridge with respect to the external phase shift angle, the dead time, and the load impedance; and

substituting the fifth formula into the fourth formula to obtain the functional relationship formula of the current effective value for the resonant cavity with respect to the external phase shift angle, the voltage gain, and the dead time.

In an embodiment, the obtaining, based on the second formula and the third formula, the fifth formula of an average output current of the second active bridge with respect to the external phase shift angle, the dead time, and the load impedance includes:

integrating a product of the output voltage of the first active bridge and current of the resonant cavity in a period, to form a sixth formula of an average output power of the first active bridge with respect to the external phase shift angle, the voltage gain, the dead time, and the load impedance; and

obtaining, based on the sixth formula, the fifth formula of an average output current of the second active bridge with respect to the external phase shift angle, the voltage gain, the dead time, and the load impedance.

In an embodiment, the determining the first boundary range of the external phase shift angle based on the functional relationship formula of the current effective value for the resonant cavity with respect to the external phase shift angle includes:

calculating a minimum value of the functional relationship formula of the current effective value with respect to the external phase shift angle, and determining, based on the minimum value of the functional relationship formula of the current effective value with respect to the external phase shift angle, the functional relationship formula of the external phase shift angle with respect to the dead time and the voltage gain.

In an embodiment, the calculating the minimum value of the functional relationship formula of the current effective value with respect to the external phase shift angle, and determining, based on the minimum value of the functional relationship formula of the current effective value with respect to the external phase shift angle, the functional relationship formula of the external phase shift angle with respect to the dead time and the voltage gain includes:

calculating a first-order derivative of the functional relationship formula of the current effective value with respect to the external phase shift angle, to form a first functional relationship formula of the external phase shift angle with respect to the dead time and the voltage gain when the voltage gain is in a first interval, and form a second functional relationship formula of the external phase shift angle with respect to the dead time and the voltage gain when the voltage gain is in a second interval.

In an embodiment, the control method for the dual active bridge converter further includes:

acquiring the input voltage of the first active bridge and the output voltage of the second active bridge;

obtaining the voltage gain based on the input voltage of the first active bridge and the output voltage of the second active bridge; and

in a case that the voltage gain is in the first interval, determining the external phase shift angle based on the dead time, the voltage gain, and the first functional relationship formula; or

in a case that the voltage gain is in the second interval, determining the external phase shift angle based on the dead time, the voltage gain, and the second functional relationship formula.

In an embodiment, the control method for the dual active bridge converter further includes:

acquiring a charge amount of a parasitic capacitor of an upper switch transistor of a first phase bridge arm of the first active bridge;

acquiring a minimum current value, corresponding to the charge amount, for the resonant cavity; and

obtaining a dead time between the upper switch transistor and a lower switch transistor of the first phase bridge arm of the first active bridge based on the charge amount and the minimum current value.

In an embodiment, the control method for the dual active bridge converter further includes:

determining, based on the third formula, a third functional relationship formula of the external phase shift angle with respect to the dead time and the voltage gain when an upper switch transistor of a first phase bridge arm of the first active bridge is turned on and when a current of the resonant cavity is greater than 0;

determining, based on the third formula, a fourth functional relationship formula of the external phase shift angle with respect to the dead time and the voltage gain when an upper switch transistor of a first phase bridge arm of the second active bridge is turned on and when a current of the resonant cavity is less than 0; and

determining a second boundary range of the external phase shift angle based on the third functional relationship formula and the fourth functional relationship formula.

In an embodiment, the control method for the dual active bridge converter further includes:

determining a third boundary range of the external phase shift angle based on an intersection of the first boundary range and the second boundary range; and

outputting the first drive signal and the second drive signal according to the third boundary range of the external phase shift angle.

In an embodiment, after the outputting the first drive signal and the second drive signal based on the external phase shift angle, the control method for the dual active bridge converter further includes:

acquiring an output current of the dual active bridge converter;

calculating a current difference between a current reference value and the output current of the dual active bridge converter;

generating a compensation signal based on the current difference; and

adjusting the first drive signal and the second drive signal based on the compensation signal.

The present application further provides a controller, where the controller includes a memory, a processor, and a computer program stored in the memory and capable of running on the processor. When the processor is configured to execute the program, the control method for the dual active bridge converter is implemented.

The present application further provides a dual active bridge converter, including a first active bridge, a resonant cavity, and a second active bridge that are electrically connected in sequence, and the dual active bridge converter further includes the foregoing controller.

The controller is configured to: calculate an input voltage of the second active bridge to form a first formula of the input voltage of the second active bridge with respect to an external phase shift angle, where the external phase shift angle is an angular difference between a first drive signal for driving the first active bridge and a second drive signal for driving the second active bridge; and calculate an output voltage of the first active bridge to form a second formula.

The controller is further configured to: obtain, based on the first formula and the second formula, a functional relationship formula of a current effective value for the resonant cavity with respect to the external phase shift angle; determine a first boundary range of the external phase shift angle based on the functional relationship formula of the current effective value for the resonant cavity with respect to the external phase shift angle; and output the first drive signal and the second drive signal according to the first boundary range of the external phase shift angle.

In the present application, a functional relationship formula of a current effective value for a resonant cavity with respect to the external phase shift angle is determined based on an output voltage of a first active bridge and an input voltage of a second active bridge, and a boundary range of the external phase shift angle occurred when the current effective value meets a condition of relatively high working efficiency is determined according to the relationship formula, thereby improving working efficiency of a dual active bridge converter.

**BRIEF DESCRIPTION OF THE DRAWINGS**

FIG. 1 is a structural diagram of a module of a dual active bridge converter according to an embodiment of this application.

FIG. 2 is a flowchart of a control method for a dual active bridge converter according to an embodiment of this application.

FIG. 3 is a flowchart of a control method for a dual active bridge converter according to another embodiment of this application.

FIG. 4 is a flowchart of a control method for a dual active bridge converter according to still another embodiment of this application.

FIG. 5 is a flowchart of a control method for a dual active bridge converter according to still another embodiment of this application.

FIG. 6 is a flowchart of a control method for a dual active bridge converter according to still another embodiment of this application.

FIG. 7 is a flowchart of a control method for a dual active bridge converter according to still another embodiment of this application.

FIG. 8 is a graph of a first boundary range of an external phase shift angle in a control method according to this application.

FIG. 9 is a flowchart of obtaining a voltage gain and determining an external phase shift angle in a control method according to this application.

FIG. 10 is a flowchart of determining a dead time in a control method according to this application.

FIG. 11 is a flowchart of a control method for a dual active bridge converter according to still another embodiment of this application.

FIG. 12 is a graph of a second boundary range of an external phase shift angle in a control method according to this application.

FIG. 13 is a flowchart of a control method for a dual active bridge converter according to still another embodiment of this application.

FIG. 14 is a graph of a third boundary range of an external phase shift angle in a control method according to this application.

FIG. 15 is a flowchart of a control method for a dual active bridge converter according to still another embodiment of this application.

Reference numerals of main components are as follows:

dual active bridge converter 100; first active bridge 110; resonant cavity 120; second active bridge 130; controller 140; first switch transistor Q1; second switch transistor Q2; third switch transistor Q3; fourth switch transistor Q4; fifth switch transistor Q5; sixth switch transistor Q6; first voltage detection circuit 150; compensator 180; current detection circuit 170; seventh switch transistor Q7; and transformer 90.

This application will be further described in the following specific implementations with reference to the accompanying drawings.

## DETAILED DESCRIPTION OF THE EMBODIMENTS

Content of the present application will be described in more detail with reference to the accompanying drawings. The accompanying drawings illustrate exemplary embodiments of the present application. However, the present application may be implemented in many different forms and should not be construed as limiting to the exemplary embodiments set forth herein. These exemplary embodiments are provided to make the present application thorough and complete, and fully convey the scope of the present application to a person skilled in the art. Similar reference numerals indicate a same component or similar components.

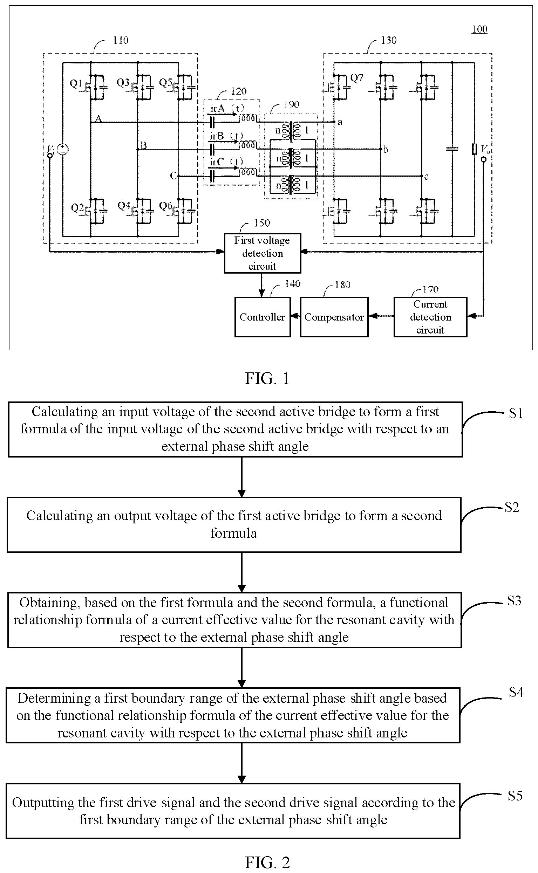

Referring to FIG. 1, the present application provides a dual active bridge converter 100, including a first active bridge 110, a resonant cavity 120, and a second active bridge 130 that are electrically connected in sequence. The dual active bridge converter 100 further includes a controller 140, and the controller 140 is electrically connected to the first active bridge 110 and the second active bridge 130.

The dual active bridge converter 100 further includes a transformer 190. A first power supply voltage on the side of the first active bridge 110 is converted by the first active bridge 110, to form a second power supply voltage, and the second power supply voltage is transmitted to the second active bridge 130 after passing through the resonant cavity 120 and the transformer 190. Alternatively, a third power supply voltage on the side of the second active bridge 130 is converted by the second active bridge 130, to form a fourth power supply voltage, and the fourth power supply voltage is transmitted to the first active bridge 110 after passing through the resonant cavity 120 and the transformer 190. The resonant cavity 120 is disposed between the first active bridge 110 and the second active bridge 130, so that a current waveform flowing through the resonant cavity 120 approaches a sine wave, which facilitates design and performance improvement of the transformer 190. The resonant cavity 120 may include an inductor and a capacitor that are serially connected in series, and the capacitor in the resonant cavity 120 may further play a role in isolating direct current.

In an embodiment, the resonant cavity 120 may include a capacitor and an inductor. The first active bridge 110 may include a phase A bridge arm, and the phase A bridge arm includes a first switch transistor Q1 and a second switch transistor Q2. A first end of the first switch transistor Q1 is configured to access a power supply voltage, a second end of the first switch transistor Q1 is electrically connected to a first end of the second switch transistor Q2, to form an output end of the first active bridge 110, and a second end of the second switch transistor Q2 is configured to access the power supply voltage. The controller 140 controls the first switch transistor Q1 and the second switch transistor Q2 to be turned on/turned off by outputting a drive signal (for example, a PWM signal) to implement voltage conversion.

Further, the first active bridge 110 may further include a third switch transistor Q3, a fourth switch transistor Q4, a fifth switch transistor Q5, and a sixth switch transistor Q6. The third switch transistor Q3 and the fourth switch transistor Q4 form a phase B bridge arm, and the fifth switch transistor Q5 and the sixth switch transistor Q6 form a phase C bridge arm. For a connection manner of the third switch transistor Q3 and the fourth switch transistor Q4, and a connection manner of the fifth switch transistor Q5 and the sixth switch transistor Q6, reference may be made to a connection manner of the first switch transistor Q1 and the second switch transistor Q2. The drive signal may be used to implement power conversion by controlling the foregoing six switch transistors. For example, the first switch transistor Q1 is controlled to be turned on and the second switch transistor Q2 is controlled to be turned off; the third switch transistor Q3 is controlled to be turned on and the fourth switch transistor Q4 is controlled to be turned off according to phase differences of 120° and 240° respectively; and the fifth switch transistor Q5 is controlled to be turned on and the sixth switch transistor Q6 is controlled to be turned off. A quantity of the switch transistors of the second active bridge 130 and circuit structures thereof are the same as a quantity of the switch transistors of the first active bridge 110 and circuit structures thereof. Details are not described herein again. A control principle of the drive signal for the second active bridge 130 is the same as a control principle for the first active bridge 110. For example, the second active bridge 130 includes at least a phase a bridge arm, and an upper switch transistor of the phase a bridge arm is a seventh switch transistor Q7. The controller 140 may output a first drive signal to control the first switch transistor Q1 to be turned on, and output a second drive signal to control the seventh switch transistor Q7 to be turned on, where an angle difference between the first drive signal and the second drive signal is an external phase shift angle.

In some embodiments, the dual active bridge converter 100 further includes a first voltage detection circuit 150. The first voltage detection circuit 150 is configured to detect an input voltage of the dual active bridge converter 100 (namely, an input voltage of the first active bridge 110) and an output voltage of the dual active bridge converter 100 (namely, an output voltage of the second active bridge 130). The first voltage detection circuit 150 may be implemented by using a voltage division resistor. The controller 140 may calculate a voltage gain based on a voltage ratio of the input voltage to the output voltage of the dual active bridge converter 100 and a turns ratio of the transformer 190 of the dual active bridge converter 100.

In some embodiments, the controller 140 is further configured to: calculate an input voltage of the second active bridge 130 to form a first formula of the input voltage of the second active bridge 130 with respect to an external phase shift angle, where the external phase shift angle is an angular difference between a first drive signal for driving the first active bridge 110 and a second drive signal for driving the second active bridge 130; and calculate an output voltage of the first active bridge 110 to form a second formula.

In some embodiments, the controller 140 is further configured to: obtain, based on the first formula and the second formula, a functional relationship formula of the current effective value for the resonant cavity 120 with respect to the external phase shift angle, determine a first boundary range of the external phase shift angle based on the functional relationship formula of the current effective value for the resonant cavity 120 with respect to the external phase shift angle; and output, according to the first boundary range of the external phase shift angle, the first drive signal for driving the first active bridge 110 and the second drive signal for driving the second active bridge 130.

In some embodiments, the controller 140 is further configured to: acquire the input voltage of the first active bridge 110 and the output voltage of the second active bridge 130 that are detected by a second voltage detection circuit 160, and obtain a voltage gain based on the input voltage of the first active bridge 110 and the output voltage of the second active bridge 130, where the voltage gain is an amplification multiple of the output voltage of the second active bridge 130 relative to the input voltage of the first active bridge 110. A manner in which the controller 140 converts the input voltage of the second active bridge 130 to obtain a formula of the input voltage of the second active bridge 130 with respect to the external phase shift angle may be as follows: the controller 140 performs Fourier transform on the input voltage of the second active bridge 130 to form the first formula of the input voltage of the second active bridge 130 with respect to the external phase shift angle and the voltage gain.

In some embodiments, the dual active bridge converter 100 further includes a current detection circuit 170. The current detection circuit 170 is configured to detect an output current of the dual active bridge converter 100. The current detection circuit 170 may implement detection by using a detection resistor or a current sensor (CT). In some embodiments, the dual active bridge converter 100 further includes a compensator 180. The compensator 180 is configured to generate a compensation signal based on an output current of the dual active bridge converter 100. The compensator 180 may be implemented by using a PI compensator.

Specifically, the compensator 180 acquires the output current, detected by the current detection circuit 170, of the dual active bridge converter 100, calculates a current difference between a current reference value and the output current of the dual active bridge converter 100, and generates the compensation signal based on the current difference. The controller 140 is further configured to adjust the first drive signal and the second drive signal based on the compensation signal.

Referring to FIG. 2, the present application further proposes a control method for a dual active bridge converter 100, and the method includes the following steps.

S1. An input voltage of the second active bridge 130 is calculated to form a first formula of the input voltage of the second active bridge 130 with respect to an external phase shift angle. The external phase shift angle is an angle difference between a first drive signal for driving the first active bridge 110 and a second drive signal for driving the second active bridge 130.

In this embodiment, an output voltage of the first active bridge 110 and the input voltage of the second active bridge 130 are detected by using a first voltage detection circuit 150. The dual active bridge converter 100 may be applied to a single-phase power supply, or may be applied to three-phase power supplies. When the dual active bridge converter 100 is applied to the three-phase power supplies, for example, the first active bridge 110 includes a phase A bridge arm, a phase B bridge arm, and a phase C bridge arm, and the second active bridge 130 includes a phase a bridge arm, a phase b bridge arm, and a phase c bridge arm that respectively correspond to the phase A bridge arm, the phase B bridge arm, and the phase C bridge arm. Because of three-phase symmetry, control principles of the three bridge arms that are in a one-to-one correspondence with the three-phase power supplies are the same. In this embodiment, the phase A bridge arm and the phase a bridge arm are used as examples to describe a principle. For control principles of the remaining two-phase bridge arms, reference may be made to that for the phase A bridge arm and the phase a bridge arm.

In this embodiment, a controller 140 converts the input voltage of the second active bridge 130 to form the first formula of the input voltage of the second active bridge 130 with respect to the external phase shift angle, so that a current effective value for a resonant cavity 120 is calculated according to the first formula, and a formula of the current effective value with respect to the external phase shift angle is formed.

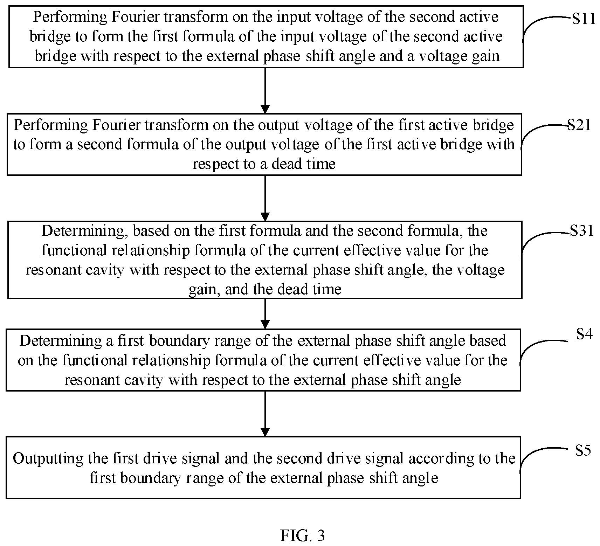

Referring to FIG. 3, in an embodiment, Step S1 includes the following steps.

S11. Fourier transform is performed on the input voltage of the second active bridge 130 to form the first formula of the input voltage of the second active bridge 130 with respect to the external phase shift angle and a voltage gain. The voltage gain is an amplification multiple of an output voltage of the second active bridge 130 relative to an input voltage of the first active bridge 110.

In this embodiment, the fundamental wave analysis method may be used for a phase voltage of the phase a bridge arm on a secondary side of a transformer 190, and after conversion of a turns ratio of the transformer 190 and normalization processing, the first formula of the input voltage of the second active bridge 130 with respect to the external phase shift angle is obtained as follows:

$$V_{an} = \frac{2M\sin(\omega t - \theta)}{\pi}$$

where $V_{an}$ denotes an input voltage of the phase a of the second active bridge 130, namely, a phase voltage of the phase a bridge arm, M denotes a voltage gain, $\omega$ denotes a frequency of the input voltage of the second active bridge 130, $\theta$ denotes the external phase shift angle, namely, an angle at which a drive signal of an upper transistor of the phase A bridge arm is earlier than a drive signal of an upper transistor of the phase a bridge arm, and t denotes time.

S2. The output voltage of the first active bridge 110 is calculated to form a second formula.

In this embodiment, the controller 140 converts the output voltage of the first active bridge 110 to obtain the second formula of the output voltage of the first active bridge 110 with respect to the external phase shift angle, so as to obtain a formula for calculating the current effective value of the resonant cavity 120 according to the second formula.

In an embodiment, Step S2 includes:

S21. Fourier transform is performed on the output voltage of the first active bridge 110 to form the second formula of the output voltage of the first active bridge 110 with respect to a dead time, where the dead time is an interlock delay time between an upper switch transistor and a lower switch transistor of any phase bridge arm of the first active bridge 110.

In this embodiment, the fundamental wave analysis method may be used for a phase voltage of the phase A bridge arm on a primary side of the transformer 190, and after conversion of a turns ratio of the transformer 190 and normalization processing, the second formula of the output voltage of the first active bridge 110 with respect to the dead time is obtained as follows:

$$V_{AN} = \frac{2\sin(\alpha_p)\sin(\omega t)}{\pi\alpha_p}$$

where $V_{AN}$ denotes a phase A output voltage of the first active bridge 110, namely, a phase voltage of the phase A bridge arm, $\alpha_p$ denotes a dead time for implementing zero voltage turn-on of the phase A upper and lower switch transistors, namely, a dead time between a drive signal of an upper transistor and a drive signal of a lower transistor of the phase A bridge arm, and t denotes time.

S3. A functional relationship formula of a current effective value for the resonant cavity 120 with respect to the external phase shift angle is obtained based on the first formula and the second formula.

To improve efficiency of the dual active bridge converter 100, an effective value of current flowing through the resonant cavity 120 should be minimized to reduce loss on the line. In this embodiment, the functional relationship formula of the current effective value for the resonant cavity 120 with respect to the external phase shift angle is determined based on the output voltage of the first active bridge 110 and the first formula, so that an external phase shift angle with a minimum current effective value may be determined according to the functional relationship formula.

In an embodiment, Step S3 includes:

S31. The functional relationship formula of the current effective value for the resonant cavity 120 with respect to the external phase shift angle, the voltage gain, and the dead time is determined based on the first formula and the second formula.

In this embodiment, after the functional relationship formula of the current effective value for the resonant cavity 120 with respect to the external phase shift angle, the voltage gain, and the dead time is determined, a relationship between the external phase shift angle, the voltage gain, and the dead time in a condition of meeting the minimum current effective value may be determined, so that output of the external phase shift angle, the voltage gain, and the dead time may be controlled to meet the relationship, achieving the minimum effective current value to minimize loss on the line.

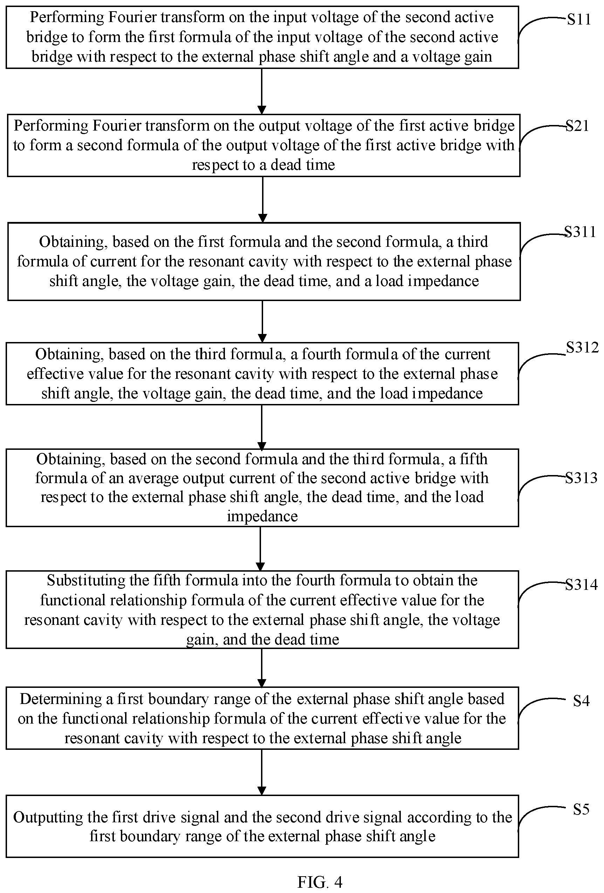

Referring to FIG. 4, in an embodiment, Step S31 further includes:

S311. A third formula of current for the resonant cavity 120 with respect to the external phase shift angle, the voltage gain, the dead time, and a load impedance is obtained based on the first formula and the second formula.

In this embodiment, a voltage VLCr of the resonant cavity 120 may be obtained by using a Kirhoff's voltage law as follows:

$$VLCr = \frac{2\sin\left(\alpha_p\right)\sin\left(\omega t\right)}{\pi\alpha_p} - \frac{2M\sin\left(\omega t - \theta\right)}{\pi}$$

Further, it may be learned from Ohm's law that the current of the resonant cavity 120 is ILCr = VLCr/(R + jX), where R denotes a resistance of the resonant cavity 120 (a resistance of the resonant cavity 120 is 0), and X denotes a reactance of the resonant cavity 120. Thus, the third formula of the current for the resonant cavity 120 with respect to the external phase shift angle, the voltage gain, and the dead time is obtained as follows:

$$ILCr = \frac{2M\cos\left(\theta - \omega t\right)\alpha_p - \sin\left(\alpha_p + \omega t\right) + \sin\left(-\alpha_p + \omega t\right)}{\pi\alpha_p X}$$

S312. A fourth formula of the current effective value for the resonant cavity 120 with respect to the external phase shift angle, the voltage gain, the dead time, and the load impedance is obtained based on the third formula.

In this embodiment, an effective value of current ILCr for the resonant cavity 120 in a period may be calculated to form a fourth formula of a current effective value ILCr_rms for the resonant cavity 120 with respect to the external phase shift angle, the voltage gain, the dead time, and the load impedance.

$$ILCr\_rms = \frac{\sqrt{\dfrac{2M^2\alpha_p^2 - 2M\alpha_p\sin\left(\theta + \alpha_p\right) + 2M\alpha_p\sin\left(\theta - \alpha_p\right) - \cos\left(2\alpha_p\right) + 1}{\alpha_p^2 X^2}}}{\pi}$$

S313. A fifth formula of the output current of the second active bridge 130 with respect to the external phase shift angle, the dead time, and the load impedance is obtained based on the second formula and the third formula.

In this embodiment, the output current of the second active bridge 130 may be obtained through detection by a current detection circuit 170.

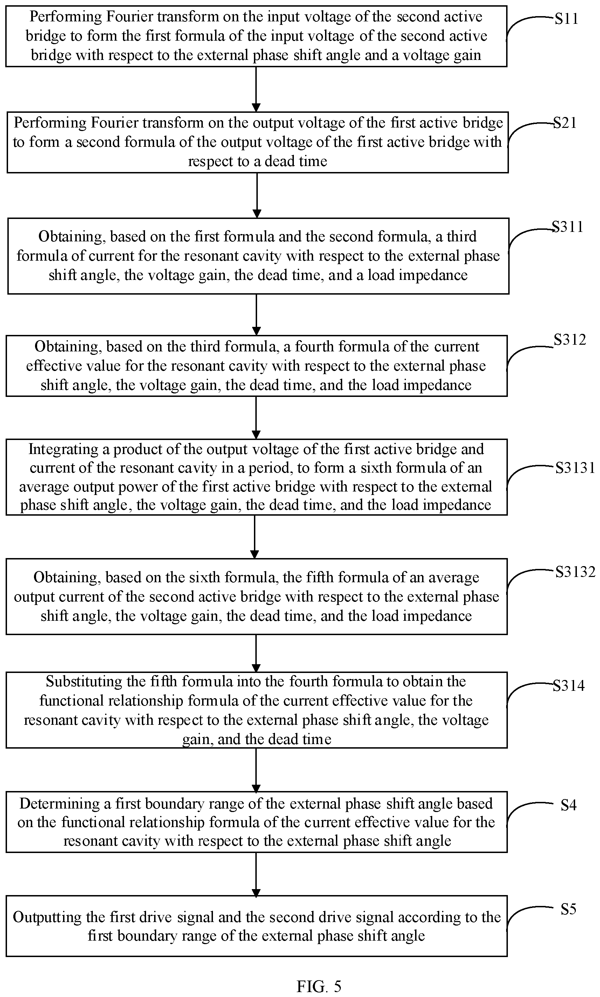

Referring to FIG. 5, specifically, Step S313 includes:

S3131. A product of the output voltage of the first active bridge 110 and current of the resonant cavity 120 in a period is integrated, to form a sixth formula of an average output power of the first active bridge 110 with respect to the external phase shift angle, the voltage gain, the dead time, and fifth load impedance.

In this embodiment, the output voltage (phase voltage of the phase A bridge arm) of the first active bridge 110 is also an input voltage of the resonant cavity 120. The product of the output voltage (phase voltage of the phase A bridge arm) of the first active bridge 110 and current of the resonant cavity 120 in a period is integrated to obtain an input power of the resonant cavity 120, that is, a sixth formula of an average output power (output power of the phase A bridge arm) PoA of the first active bridge 110 with respect to the external phase shift angle, the voltage gain, the dead time, and the load impedance are as follows:

$$PoA = \frac{2 \sin\left(\alpha_p\right) M \sin\left(\theta\right)}{\pi^2 \alpha_p X}$$

S3132. The fifth formula of an average output current of the second active bridge 130 with respect to the external phase shift angle, the voltage gain, the dead time, and the load impedance is obtained based on the six formula.

The average output power of the first active bridge 110 (average output power of the phase A bridge arm) may be considered as an average output power of the second active bridge 130 (average output power of the phase a bridge arm). The input voltage of the first active bridge 110 is normalized to 1, and then the output voltage of the second active bridge 130 is normalized to a voltage gain M. The output current of the second active bridge 130 is IoA = PoA/Vo = PoA/M. Thus, the fifth formula of the output current IoA of the second active bridge 130 with respect to the external phase shift angle, the voltage gain, the dead time, and the load impedance is obtained as follows:

$$IoA = \frac{2 \sin\left(\alpha_p\right) \sin\left(\theta\right)}{\pi^2 \alpha_p X}$$

S314. The fifth formula is substituted into the fourth formula to obtain the functional relationship formula of the current effective value for the resonant cavity 120 with respect to the external phase shift angle, the voltage gain, and the dead time.

In this embodiment, an unstable parameter reactance X is replaced with the output current of the second active bridge 130 that is easily directly acquired, to remove the parameter reactance X in the fourth formula, so as to obtain the functional relationship formula of the current effective value for the resonant cavity 120 with respect to the output current of the first active bridge 110, the external phase shift angle, the voltage gain, and the dead time.

$$ILCr\_rms = \frac{\pi \sqrt{\dfrac{\left(2M^2\alpha_p^2 - 2M\alpha_p \sin\left(\theta+\alpha_p\right) + 2M\alpha_p \sin\left(\theta-\alpha_p\right) - \cos\left(2\alpha_p\right) + 1\right) IoA^2}{\sin\left(\alpha_p\right)^2 \sin\left(\theta\right)^2}}}{2}$$

The output current of the second active bridge 130 is a known constant and its value may be determined through detection. Thus, the functional relationship formula of the current effective value with respect to the external phase shift angle, the voltage gain, and the dead time may be determined, and no new unknown parameter is introduced, facilitating calculation of a minimum value of the current effective value.

S4. A first boundary range of the external phase shift angle is determined based on the functional relationship formula of the current effective value for the resonant cavity 120 with respect to the external phase shift angle.

It may be understood that efficiency of the dual active bridge converter 100 is relatively high when the current effective value for the resonant cavity 120 is relatively small. The first boundary range of the external phase shift angle occurred when current for the resonant cavity 120 is in a smaller numerical range may be determined according to the functional relationship formula of the current effective value for the resonant cavity 120 with respect to the external phase shift angle, so as to output the external phase shift angle in the first boundary range.

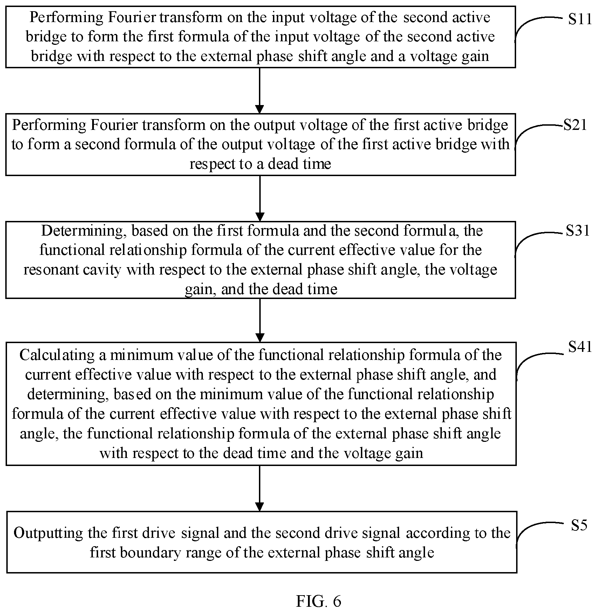

Referring to FIG. 6, in an embodiment, Step S4 may include:

S41. A minimum value of the functional relationship formula of the current effective value with respect to the external phase shift angle is calculated, and the functional relationship formula of the external phase shift angle with respect to the dead time and the voltage gain is determined based on the minimum value of the functional relationship formula of the current effective value with respect to the external phase shift angle.

A small current effective value of the resonant cavity 120 indicates high efficiency of the dual active bridge converter 100. Therefore, in this embodiment, the functional relationship formula of the external phase shift angle with respect to the dead time and the voltage gain may be formed by calculating a minimum value of the current effective value for the resonant cavity 120, and an external phase shift angle is output according to the functional relationship formula, so as to ensure working efficiency of the dual active bridge converter 100.

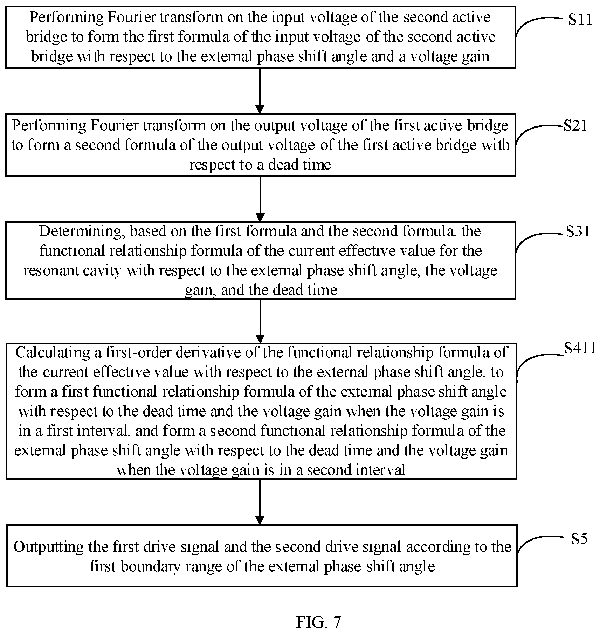

Referring to FIG. 7, in an embodiment, Step S41 may include:

S411. A first-order derivative of the functional relationship formula of the current effective value with respect to the external phase shift angle is calculated, to form a first functional relationship formula of the external phase shift angle with respect to the dead time and the voltage gain when the voltage gain is in a first interval, and form a second functional relationship formula of the external phase shift angle with respect to the dead time and the voltage gain when the voltage gain is in a second interval.

First-order derivation is performed on the functional relationship formula of the current effective value with respect to the external phase shift angle, and the derivative is set to 0. In this case, a condition that the current effective value reaches a minimum value may be obtained as follows:

$$\frac{\partial \text{ILCr\_rms}}{\partial \theta} = 0$$

$$\begin{cases} \theta = \arctan\left(\dfrac{\sqrt{-M^2\alpha_p^2 + \sin\left(\alpha_p\right)^2}}{M\alpha_p}\right), 0 < M < 1 \\[4ex] \theta = \arctan\left(\dfrac{\sqrt{M^2\alpha_p^2 - \sin\left(\alpha_p\right)^2}}{\sin\left(\alpha_p\right)}\right), 1 < M < 2 \end{cases}$$

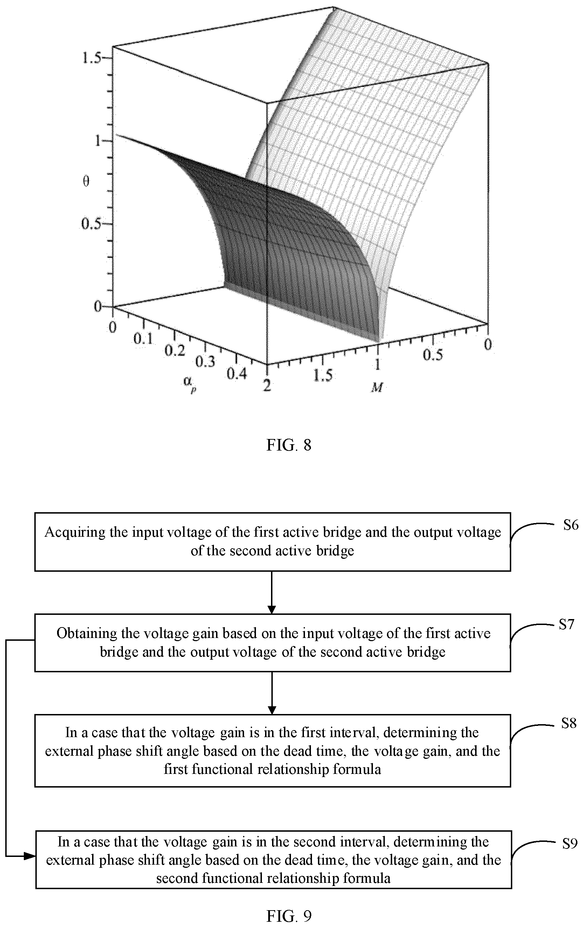

Therefore, the condition that the current effective value of the resonant cavity 120 reaches a minimum value is shown in FIG. 8. In ranges of $0 < M < 1$ and $1 < M < 2$, when a relationship between an external phase shift angle $\theta$ and a dead time $\alpha_p$ for a primary side and a voltage gain M meets the foregoing condition, a minimum current effective value of the resonant cavity 120 may be obtained.

S5. The first drive signal and the second drive signal are output according to the first boundary range of the external phase shift angle.

The first drive signal and the second drive signal are output according to the first boundary range of the external phase shift angle, so that the external phase shift angle between the first drive signal and the second drive signal meets a condition of the minimum current effective value. For example, the voltage gain and dead time are controlled according to the first functional relationship formula and the second functional relationship formula, so as to control the external phase shift angle to be in the first boundary range and enable the current effective value to be in a minimum range, thereby improving working efficiency of the dual active bridge converter 100.

Referring to FIG. 9, in an embodiment, the control method for the dual active bridge converter 100 further includes:

S6. The input voltage of the first active bridge 110 and the output voltage of the second active bridge 130 are acquired.

The input voltage of the first active bridge 110 and the output voltage of the second active bridge 130 may be detected by a first voltage detection circuit 150

S7. The input voltage of the first active bridge 110 and the output voltage of the second active bridge 130 are calculated to obtain a voltage gain.

S8. In a case that the voltage gain is in the first interval, the external phase shift angle is determined based on the dead time, the voltage gain, and the first functional relationship formula.

If the voltage gain is in the first interval, the voltage gain and the dead time are substituted into the first functional relationship formula to determine the external phase shift angle.

S9. In a case that the voltage gain is in the second interval, the external phase shift angle is determined based on the dead time, the voltage gain, and the second functional relationship formula.

If the voltage gain is in the second interval, the voltage gain and the dead time are substituted into the second functional relationship formula to determine the external phase shift angle.

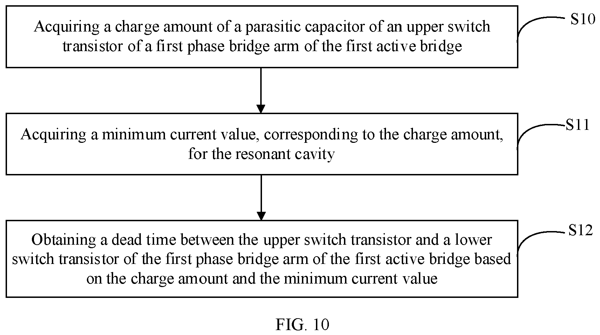

Referring to FIG. 10, in an embodiment, the control method for the dual active bridge converter 100 further includes:

S10. A charge amount of a parasitic capacitor of an upper switch transistor of a first phase bridge arm of the first active bridge 110 is acquired.

A charge amount of a parasitic capacitor of the first switch transistor Q1 may be obtained from a preset table. The preset table includes charge amounts of the parasitic capacitor at different voltages, and a charge amount of the parasitic capacitor at the output voltage of the first active bridge 110 is acquired according to the preset table. Alternatively, a charge amount of a parasitic capacitor of the first switch transistor Q1 may be acquired according to a voltage-capacitance graph of the parasitic capacitor. A charge amount of the parasitic capacitor is determined by calculating a product of a voltage and a capacitance and integrating the product of the voltage and the capacitance based on the output voltage of the first active bridge 110.

S11. A minimum current value, corresponding to the charge amount, for the resonant cavity 120 is acquired.

A minimum current value, corresponding to the charge amount, of the resonant cavity 120 is a minimum current for the resonant cavity 120 that enables a charge of a parasitic capacitor to be discharged in the dead time. The minimum current value may be acquired from the preset table. The preset table further includes minimum current values corresponding to different charge amounts.

S12. A dead time between the upper switch transistor and a lower switch transistor of the first phase bridge arm of the first active bridge 110 is obtained based on the charge amount and the minimum current value.

In this embodiment, the dead time may be determined through calculation according to the following formula:

$$\int_{t_{\text{off}}}^{t_{\text{on}}} I_{LCr\min}(t)\,\mathrm{d}t \geq Q_{C\max}$$

where $t_{\text{off}} - t_{\text{on}}$ denotes a dead time, $Q_{C\max}$ denotes a charge amount of the parasitic capacitor of the first switch transistor Q1, and $I_{LCrmin}$ denotes a minimum current for the resonant cavity 120 that enables the charge of the parasitic capacitor to be discharged in the dead time.

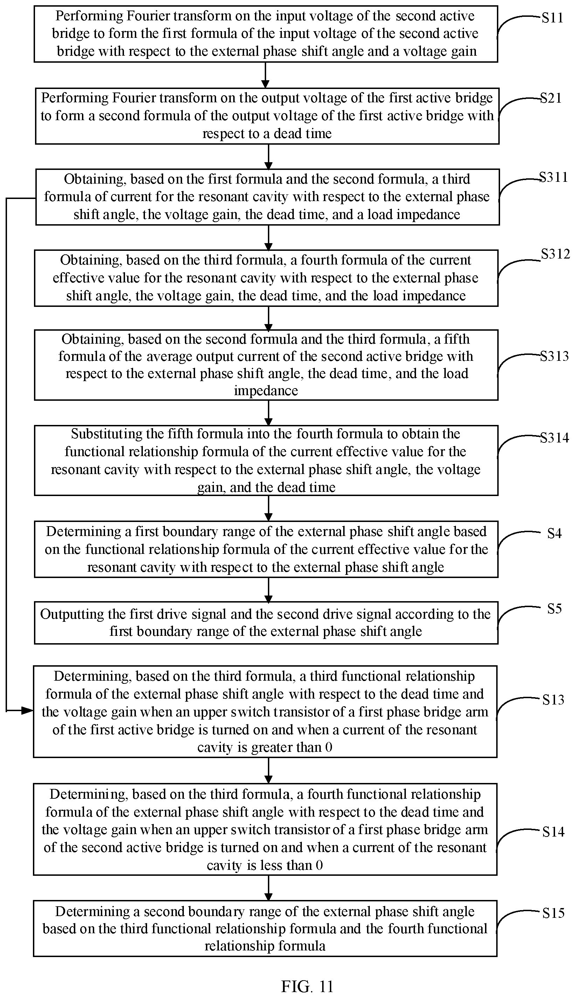

Referring to FIG. 11, in an embodiment, the control method for the dual active bridge converter 100 further includes:

S 13. A third functional relationship formula of the external phase shift angle with respect to the dead time and the voltage gain in a case that an upper switch transistor of a first phase bridge arm of the first active bridge 110 is turned on and a current of the resonant cavity 120 is greater than 0 is determined based on the third formula.

When a switch transistor works in hard switch mode, voltage drop/rise and current rise/fall waveforms overlap in an on/off process, resulting in large loss in the switch transistor. To implement zero voltage switching (ZVS) of a soft switch, for the phase A bridge arm on the primary side of the transformer 190, when the first switch transistor Q1 is turned on, current ILCr of the resonant cavity 120 should be a negative value, so that charge of the parasitic capacitor of the first switch transistor Q1 is discharged. Thus, a body diode is turned on before the first drive signal arrives, thereby implementing zero voltage switching. This period of time is the dead time for the primary side. Similarly, for the phase a bridge arm on the secondary side, when a phase a upper transistor on the secondary side is turned on, the current ILCr of the resonant cavity 120 should be a positive value, so that charge of the parasitic capacitor on the phase a upper transistor is discharged. Thus, a zero voltage is implemented before the second drive signal arrives, thereby implementing zero voltage switching.

For example, when the first switch transistor Q1 is turned on, and a current for the resonant cavity 120 is greater than 0, that is, $\omega t = \alpha_p$, and ILCr > 0:

$$\mathrm{ILCr\_}\alpha_p = \frac{2M\cos(\theta - \alpha_p)\alpha_p - \sin(\alpha_p + \alpha_p) + \sin(-\alpha_p + \alpha_p)}{\pi\alpha_p X}$$

$\mathrm{ILCr\_}\alpha_p$ is a current obtained when $\omega t = \alpha\rho$, so that the third functional relationship formula of the external phase shift angle with respect to the dead time and the voltage gain is obtained as follows:

$$\theta > \alpha_p + \arccos\left(\frac{\sin(2\alpha_p)}{2M\alpha_p}\right)$$

S14. A fourth functional relationship formula of the external phase shift angle with respect to the dead time and the voltage gain in a case that an upper switch transistor of a first phase bridge arm of the second active bridge 130 is turned on and a current of the resonant cavity 120 is less than 0 is determined based on the third formula.

For example, when a seventh switch transistor Q7 is turned on, and a current of the resonant cavity 120 is less than 0, that is, $\omega t = \theta$, and ILCr < 0:

$$\mathrm{ILCr\_}\theta = \frac{2M\cos(\theta - \theta)\alpha_p - \sin(\alpha_p + \theta) + \sin(-\alpha_p + \theta)}{\pi\alpha_p X}$$

$\mathrm{ILCr\_}\theta$ is a current effective value obtained when $\omega t = \theta$, so that the fourth functional relationship formula of the external phase shift angle with respect to the dead time and the voltage gain is obtained as follows:

$$\theta > \arccos\left(\frac{M \cdot \alpha_p}{\sin(\alpha_p)}\right)$$

S 15. A second boundary range of the external phase shift angle is determined based on the third functional relationship formula and the fourth functional relationship formula.

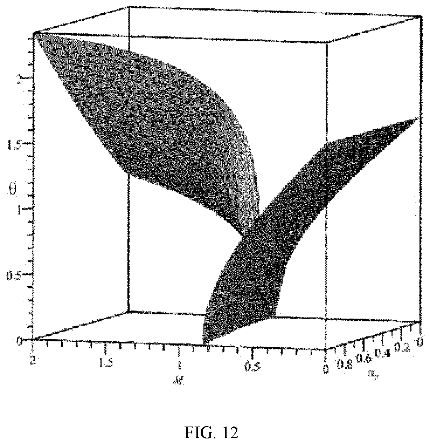

A boundary of an external phase shift angle $\theta$ may be obtained according to the third functional relationship formula and the fourth functional relationship formula. As shown in FIG. 12, when the external phase shift angle $\theta$ is above the curved surface, a ZVS soft switch of switch transistors on the primary side and the secondary side may be implemented.

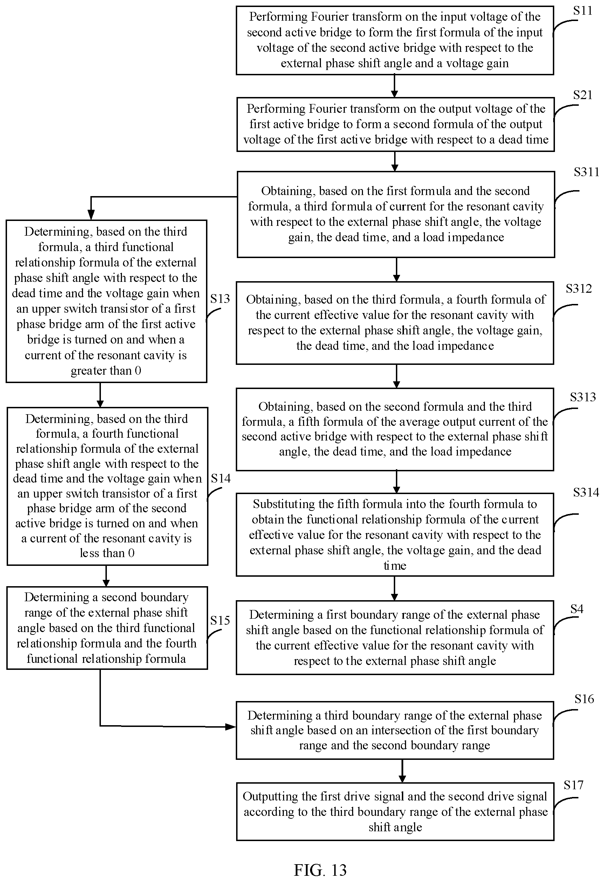

Referring to FIG. 13, in an embodiment, the control method for the dual active bridge converter 100 further includes:

S16. A third boundary range of the external phase shift angle is determined based on an intersection of the first boundary range and the second boundary range.

When the external phase shift angle is in the intersection of the first boundary range and the second boundary range, a minimum current effective value and ZVS soft switch may be implemented, thereby further improving working efficiency of the dual-power converter. A relationship between the external phase shift angle $\theta$ and a direct current voltage gain M and a dead time $\alpha_p$ of the primary side is finally shown in the following formula:

$$\begin{cases} \theta > \alpha_p + \arccos\left(\dfrac{\sin(2 \cdot \alpha_p)}{2 \cdot M \cdot \alpha_p}\right), 0 < M < 1 \\[3mm] \theta > \arccos\left(\dfrac{M \cdot \alpha_p}{\sin(\alpha_p)}\right), 1 < M < 2 \end{cases}$$

S17. The first drive signal and the second drive signal are output according to the third boundary range of the external phase shift angle.

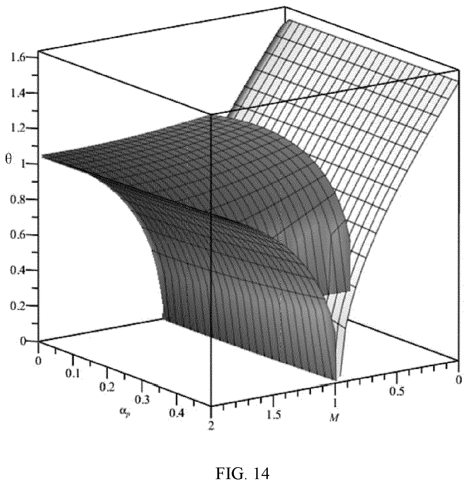

A boundary condition finally obtained for the external phase shift angle is shown in FIG. 14. In a process of change of an input voltage and an output voltage of a dual-power converter, the external phase shift angle $\theta$ is always controlled to change in a range above the curved surface, and a corresponding first drive signal and a corresponding second drive signal are output to control working of the first active bridge 110 and the second active bridge 130, so that high-efficiency working of the dual active bridge converter 100 may be implemented.

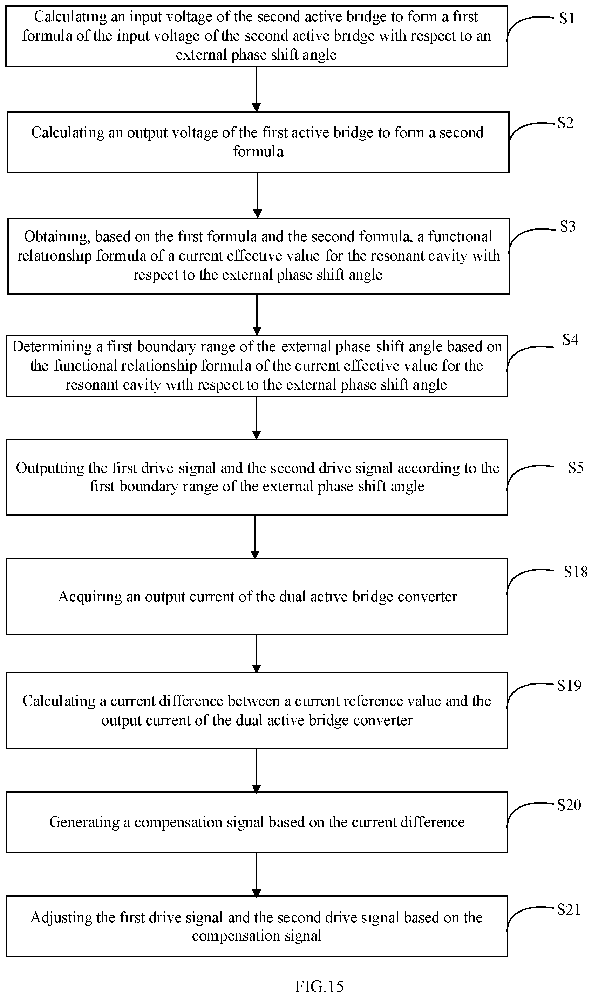

Referring to FIG. 15, in an embodiment, after the first drive signal and the second drive signal are output based on the external phase shift angle, the control method for the dual active bridge converter 100 further includes:

S18. An output current of the dual active bridge converter 100 is acquired.

In this embodiment, the output current of the dual active bridge converter 100 is detected in real time by using the current detection circuit 170, and the dual active bridge converter 100 is adjusted based on the output current of the dual active bridge converter 100, so that the dual active bridge converter 100 remains in a high efficient working state.

S19. A current difference between a current reference value and the output current of the dual active bridge converter 100 is calculated.

In this embodiment, the current difference between the current reference value and the output current of the dual active bridge converter 100 is calculated to determine a difference required to be adjusted, and further adjustment is performed based on the difference.

S20. A compensation signal is generated based on the current difference.

In this embodiment, the dual active bridge converter 100 further includes a compensator 180. The compensator 180 is configured to generate a compensation signal based on the current difference.

S21. The first drive signal and the second drive signal are adjusted based on the compensation signal.

In this embodiment, the controller 140 adjusts frequencies of the first drive signal and the second drive signal based on the compensation signal, and further adjusts switching frequencies of switch transistors in the first active bridge 110 and the second active bridge 130, so as to control an output current and an output power of a converter, thereby implementing closed-loop control.

The foregoing describes specific implementations of the present application with reference to the accompanying drawings. However, a person of ordinary skill in the art may understand that, various changes and replacements may be made to the specific implementations of the present application without departing from the scope of the present application. These changes and replacements fall within the scope of the present application.

**Claims**

1. A control method for a dual active bridge converter, wherein the dual active bridge converter comprises a first active bridge, a resonant cavity, and a second active bridge that are electrically connected in sequence, and the method comprises:

   calculating (S1) an input voltage of the second active bridge to form a first formula of the input voltage of the second active bridge with respect to an external phase shift angle, wherein the external phase shift angle is an angular difference between a first drive signal for driving the first active bridge and a second drive signal for driving the second active bridge;
   calculating (S2) an output voltage of the first active bridge to form a second formula;
   obtaining (S3), based on the first formula and the second formula, a functional relationship formula of a current effective value for the resonant cavity with respect to the external phase shift angle;
   determining (S4) a first boundary range of the external phase shift angle based on the functional relationship formula of the current effective value for the resonant cavity with respect to the external phase shift angle; and
   outputting (S5) the first drive signal and the second drive signal according to the first boundary range of the external phase shift angle.

2. The control method for the dual active bridge converter according to claim 1, wherein the calculating the input voltage of the second active bridge to form the first formula of the input voltage of the second active bridge with respect to the external phase shift angle comprises:

   performing (S11) Fourier transform on the input voltage of the second active bridge to form the first formula of the input voltage of the second active bridge with respect to the external phase shift angle and a voltage gain, wherein the voltage gain is an amplification multiple of an output voltage of the second active bridge relative to an input voltage of the first active bridge;
   the calculating the output voltage of the first active bridge to form the second formula comprises:

   performing (S21) Fourier transform on the output voltage of the first active bridge to form a second formula of the output voltage of the first active bridge with respect to a dead time, wherein the dead time is an interlock delay time between an upper switch transistor and a lower switch transistor of any phase bridge arm of the first active bridge; and
   the obtaining, based on the first formula and the second formula, the functional relationship formula of the current effective value for the resonant cavity with respect to the external phase shift angle comprises:
   determining (S31), based on the first formula and the second formula, the functional relationship formula of the current effective value for the resonant cavity with respect to the external phase shift angle, the voltage gain, and the dead time.

3. The control method for the dual active bridge converter according to claim 2, wherein the determining, based on the first formula and the second formula, the functional relationship formula of the current effective value for the resonant cavity with respect to the external phase shift angle, the voltage gain, and the dead time comprises:

   obtaining (S311), based on the first formula and the second formula, a third formula of current for the resonant cavity with respect to the external phase shift angle, the voltage gain, the dead time, and a load impedance;
   obtaining (S312), based on the third formula, a fourth formula of the current effective value for the resonant cavity with respect to the external phase shift angle, the voltage gain, the dead time, and the load impedance;
   obtaining (S313), based on the second formula and the third formula, a fifth formula of an average output current of the second active bridge with respect to the external phase shift angle, the dead time, and the load impedance; and
   substituting (S314) the fifth formula into the fourth formula to obtain the functional relationship formula of the current effective value for the resonant cavity with respect to the external phase shift angle, the voltage gain, and the dead time.

4. The control method for the dual active bridge converter according to claim 3, wherein the obtaining, based on the second formula and the third formula, the fifth formula of an average output current of the second active bridge with respect to the external phase shift angle, the dead time, and the load impedance comprises:

   integrating (S3131) a product of the output voltage of the first active bridge and current of the resonant cavity in a period, to form a sixth formula of an average output power of the first active bridge with respect to the external phase shift angle, the voltage gain, the dead time, and the load impedance; and

obtaining (S3132), based on the sixth formula, the fifth formula of an average output current of the second active bridge with respect to the external phase shift angle, the voltage gain, the dead time, and the load impedance.

5. The control method for the dual active bridge converter according to claim 2, wherein the determining the first boundary range of the external phase shift angle based on the functional relationship formula of the current effective value for the resonant cavity with respect to the external phase shift angle comprises:

calculating (S41) a minimum value of the functional relationship formula of the current effective value with respect to the external phase shift angle, and determining, based on the minimum value of the functional relationship formula of the current effective value with respect to the external phase shift angle, the functional relationship formula of the external phase shift angle with respect to the dead time and the voltage gain.

6. The control method for the dual active bridge converter according to claim 5, wherein the calculating the minimum value of the functional relationship formula of the current effective value with respect to the external phase shift angle, and determining, based on the minimum value of the functional relationship formula of the current effective value with respect to the external phase shift angle, the functional relationship formula of the external phase shift angle with respect to the dead time and the voltage gain comprises:

calculating (S411) a first-order derivative of the functional relationship formula of the current effective value with respect to the external phase shift angle, to form a first functional relationship formula of the external phase shift angle with respect to the dead time and the voltage gain when the voltage gain is in a first interval, and form a second functional relationship formula of the external phase shift angle with respect to the dead time and the voltage gain when the voltage gain is in a second interval.

7. The control method for the dual active bridge converter according to claim 6, further comprising:

acquiring (S6) the input voltage of the first active bridge and the output voltage of the second active bridge;
obtaining (S7) the voltage gain based on the input voltage of the first active bridge and the output voltage of the second active bridge; and
in a case (S8) that the voltage gain is in the first interval, determining the external phase shift angle based on the dead time, the voltage gain, and the first functional relationship formula; or
in a case (S9) that the voltage gain is in the second interval, determining the external phase shift angle based on the dead time, the voltage gain, and the second functional relationship formula.

8. The control method for the dual active bridge converter according to claim 2, further comprising:

acquiring (S10) a charge amount of a parasitic capacitor of an upper switch transistor of a first phase bridge arm of the first active bridge;
acquiring (S11) a minimum current value, corresponding to the charge amount, for the resonant cavity; and
obtaining (S12) a dead time between the upper switch transistor and a lower switch transistor of the first phase bridge arm of the first active bridge based on the charge amount and the minimum current value.

9. The control method for the dual active bridge converter according to claim 3, further comprising:

determining (S13), based on the third formula, a third functional relationship formula of the external phase shift angle with respect to the dead time and the voltage gain when an upper switch transistor of a first phase bridge arm of the first active bridge is turned on and when a current of the resonant cavity is greater than 0;
determining (S14), based on the third formula, a fourth functional relationship formula of the external phase shift angle with respect to the dead time and the voltage gain when an upper switch transistor of a first phase bridge arm of the second active bridge is turned on and when a current of the resonant cavity is less than 0; and
determining (S15) a second boundary range of the external phase shift angle based on the third functional relationship formula and the fourth functional relationship formula.

10. The control method for the dual active bridge converter according to claim 9, further comprising:

determining (S16) a third boundary range of the external phase shift angle based on an intersection of the first boundary range and the second boundary range; and
outputting (S17) the first drive signal and the second drive signal according to the third boundary range of the external phase shift angle.

11. The control method for a dual active bridge converter according to claim 1, wherein after the outputting the first drive signal and the second drive signal based on the external phase shift angle, the control method for the dual active bridge converter further comprises:

acquiring (S18) an output current of the dual active bridge converter;
calculating (S19) a current difference between a current reference value and the output current of the dual active bridge converter;
generating (S20) a compensation signal based on the current difference; and
adjusting (S21) the first drive signal and the second drive signal based on the compensation signal.

12. A controller, wherein the controller comprises a memory, a processor, and a computer program stored in the memory and capable of running on the processor, and when the processor is configured to execute the program, the control method for the dual active bridge converter according to any one of claims 1 to 11 is implemented.

13. A dual active bridge converter, comprising a first active bridge, a resonant cavity, and a second active bridge that are electrically connected in sequence, wherein the dual active bridge converter further comprises the controller according to claim 12;

the controller is configured to: calculate an input voltage of the second active bridge to form a first formula of the input voltage of the second active bridge with respect to an external phase shift angle, wherein the external phase shift angle is an angular difference between a first drive signal for driving the first active bridge and a second drive signal for driving the second active bridge; and calculate an output voltage of the first active bridge to form a second formula; and
the controller is further configured to: obtain, based on the first formula and the second formula, a functional relationship formula of a current effective value for the resonant cavity with respect to the external phase shift angle; determine a first boundary range of the external phase shift angle based on the functional relationship formula of the current effective value for the resonant cavity with respect to the external phase shift angle; and output the first drive signal and the second drive signal according to the first boundary range of the external phase shift angle.

FIG. 1

| | |
|---|---|
| Calculating an input voltage of the second active bridge to form a first formula of the input voltage of the second active bridge with respect to an external phase shift angle | S1 |

↓

| | |
|---|---|
| Calculating an output voltage of the first active bridge to form a second formula | S2 |

↓

| | |
|---|---|
| Obtaining, based on the first formula and the second formula, a functional relationship formula of a current effective value for the resonant cavity with respect to the external phase shift angle | S3 |

↓

| | |
|---|---|
| Determining a first boundary range of the external phase shift angle based on the functional relationship formula of the current effective value for the resonant cavity with respect to the external phase shift angle | S4 |

↓

| | |
|---|---|
| Outputting the first drive signal and the second drive signal according to the first boundary range of the external phase shift angle | S5 |

FIG. 2

Performing Fourier transform on the input voltage of the second active bridge to form the first formula of the input voltage of the second active bridge with respect to the external phase shift angle and a voltage gain ⌐S11

Performing Fourier transform on the output voltage of the first active bridge to form a second formula of the output voltage of the first active bridge with respect to a dead time ⌐S21

Determining, based on the first formula and the second formula, the functional relationship formula of the current effective value for the resonant cavity with respect to the external phase shift angle, the voltage gain, and the dead time ⌐S31

Determining a first boundary range of the external phase shift angle based on the functional relationship formula of the current effective value for the resonant cavity with respect to the external phase shift angle ⌐ S4

Outputting the first drive signal and the second drive signal according to the first boundary range of the external phase shift angle ⌐ S5

FIG. 3

Performing Fourier transform on the input voltage of the second active bridge to form the first formula of the input voltage of the second active bridge with respect to the external phase shift angle and a voltage gain — S11

Performing Fourier transform on the output voltage of the first active bridge to form a second formula of the output voltage of the first active bridge with respect to a dead time — S21

Obtaining, based on the first formula and the second formula, a third formula of current for the resonant cavity with respect to the external phase shift angle, the voltage gain, the dead time, and a load impedance — S311

Obtaining, based on the third formula, a fourth formula of the current effective value for the resonant cavity with respect to the external phase shift angle, the voltage gain, the dead time, and the load impedance — S312

Obtaining, based on the second formula and the third formula, a fifth formula of an average output current of the second active bridge with respect to the external phase shift angle, the dead time, and the load impedance — S313

Substituting the fifth formula into the fourth formula to obtain the functional relationship formula of the current effective value for the resonant cavity with respect to the external phase shift angle, the voltage gain, and the dead time — S314

Determining a first boundary range of the external phase shift angle based on the functional relationship formula of the current effective value for the resonant cavity with respect to the external phase shift angle — S4

Outputting the first drive signal and the second drive signal according to the first boundary range of the external phase shift angle — S5

FIG. 4

Performing Fourier transform on the input voltage of the second active bridge to form the first formula of the input voltage of the second active bridge with respect to the external phase shift angle and a voltage gain —S11

Performing Fourier transform on the output voltage of the first active bridge to form a second formula of the output voltage of the first active bridge with respect to a dead time —S21

Obtaining, based on the first formula and the second formula, a third formula of current for the resonant cavity with respect to the external phase shift angle, the voltage gain, the dead time, and a load impedance —S311

Obtaining, based on the third formula, a fourth formula of the current effective value for the resonant cavity with respect to the external phase shift angle, the voltage gain, the dead time, and the load impedance —S312

Integrating a product of the output voltage of the first active bridge and current of the resonant cavity in a period, to form a sixth formula of an average output power of the first active bridge with respect to the external phase shift angle, the voltage gain, the dead time, and the load impedance —S3131

Obtaining, based on the sixth formula, the fifth formula of an average output current of the second active bridge with respect to the external phase shift angle, the voltage gain, the dead time, and the load impedance —S3132

Substituting the fifth formula into the fourth formula to obtain the functional relationship formula of the current effective value for the resonant cavity with respect to the external phase shift angle, the voltage gain, and the dead time —S314

Determining a first boundary range of the external phase shift angle based on the functional relationship formula of the current effective value for the resonant cavity with respect to the external phase shift angle —S4

Outputting the first drive signal and the second drive signal according to the first boundary range of the external phase shift angle —S5

FIG. 5

Performing Fourier transform on the input voltage of the second active bridge to form the first formula of the input voltage of the second active bridge with respect to the external phase shift angle and a voltage gain — S11

Performing Fourier transform on the output voltage of the first active bridge to form a second formula of the output voltage of the first active bridge with respect to a dead time — S21

Determining, based on the first formula and the second formula, the functional relationship formula of the current effective value for the resonant cavity with respect to the external phase shift angle, the voltage gain, and the dead time — S31

Calculating a minimum value of the functional relationship formula of the current effective value with respect to the external phase shift angle, and determining, based on the minimum value of the functional relationship formula of the current effective value with respect to the external phase shift angle, the functional relationship formula of the external phase shift angle with respect to the dead time and the voltage gain — S41

Outputting the first drive signal and the second drive signal according to the first boundary range of the external phase shift angle — S5

FIG. 6

Performing Fourier transform on the input voltage of the second active bridge to form the first formula of the input voltage of the second active bridge with respect to the external phase shift angle and a voltage gain — S11

Performing Fourier transform on the output voltage of the first active bridge to form a second formula of the output voltage of the first active bridge with respect to a dead time — S21

Determining, based on the first formula and the second formula, the functional relationship formula of the current effective value for the resonant cavity with respect to the external phase shift angle, the voltage gain, and the dead time — S31

Calculating a first-order derivative of the functional relationship formula of the current effective value with respect to the external phase shift angle, to form a first functional relationship formula of the external phase shift angle with respect to the dead time and the voltage gain when the voltage gain is in a first interval, and form a second functional relationship formula of the external phase shift angle with respect to the dead time and the voltage gain when the voltage gain is in a second interval — S411

Outputting the first drive signal and the second drive signal according to the first boundary range of the external phase shift angle — S5

FIG. 7

FIG. 8

| | |
|---|---|
| Acquiring the input voltage of the first active bridge and the output voltage of the second active bridge | S6 |
| Obtaining the voltage gain based on the input voltage of the first active bridge and the output voltage of the second active bridge | S7 |
| In a case that the voltage gain is in the first interval, determining the external phase shift angle based on the dead time, the voltage gain, and the first functional relationship formula | S8 |
| In a case that the voltage gain is in the second interval, determining the external phase shift angle based on the dead time, the voltage gain, and the second functional relationship formula | S9 |

FIG. 9

Acquiring a charge amount of a parasitic capacitor of an upper switch
transistor of a first phase bridge arm of the first active bridge ⟋ — S10

Acquiring a minimum current value, corresponding to the charge amount,
for the resonant cavity ⟋—S11

Obtaining a dead time between the upper switch transistor and a lower
switch transistor of the first phase bridge arm of the first active bridge based
on the charge amount and the minimum current value ⟋—S12

FIG. 10

Performing Fourier transform on the input voltage of the second active bridge to form the first formula of the input voltage of the second active bridge with respect to the external phase shift angle and a voltage gain — S11

Performing Fourier transform on the output voltage of the first active bridge to form a second formula of the output voltage of the first active bridge with respect to a dead time — S21

Obtaining, based on the first formula and the second formula, a third formula of current for the resonant cavity with respect to the external phase shift angle, the voltage gain, the dead time, and a load impedance — S311

Obtaining, based on the third formula, a fourth formula of the current effective value for the resonant cavity with respect to the external phase shift angle, the voltage gain, the dead time, and the load impedance — S312

Obtaining, based on the second formula and the third formula, a fifth formula of the average output current of the second active bridge with respect to the external phase shift angle, the dead time, and the load impedance — S313

Substituting the fifth formula into the fourth formula to obtain the functional relationship formula of the current effective value for the resonant cavity with respect to the external phase shift angle, the voltage gain, and the dead time — S314

Determining a first boundary range of the external phase shift angle based on the functional relationship formula of the current effective value for the resonant cavity with respect to the external phase shift angle — S4

Outputting the first drive signal and the second drive signal according to the first boundary range of the external phase shift angle — S5

Determining, based on the third formula, a third functional relationship formula of the external phase shift angle with respect to the dead time and the voltage gain when an upper switch transistor of a first phase bridge arm of the first active bridge is turned on and when a current of the resonant cavity is greater than 0 — S13

Determining, based on the third formula, a fourth functional relationship formula of the external phase shift angle with respect to the dead time and the voltage gain when an upper switch transistor of a first phase bridge arm of the second active bridge is turned on and when a current of the resonant cavity is less than 0 — S14

Determining a second boundary range of the external phase shift angle based on the third functional relationship formula and the fourth functional relationship formula — S15

FIG. 11

FIG. 12

Performing Fourier transform on the input voltage of the second active bridge to form the first formula of the input voltage of the second active bridge with respect to the external phase shift angle and a voltage gain — S11

Performing Fourier transform on the output voltage of the first active bridge to form a second formula of the output voltage of the first active bridge with respect to a dead time — S21

Obtaining, based on the first formula and the second formula, a third formula of current for the resonant cavity with respect to the external phase shift angle, the voltage gain, the dead time, and a load impedance — S311

Determining, based on the third formula, a third functional relationship formula of the external phase shift angle with respect to the dead time and the voltage gain when an upper switch transistor of a first phase bridge arm of the first active bridge is turned on and when a current of the resonant cavity is greater than 0 — S13

Obtaining, based on the third formula, a fourth formula of the current effective value for the resonant cavity with respect to the external phase shift angle, the voltage gain, the dead time, and the load impedance — S312

Obtaining, based on the second formula and the third formula, a fifth formula of the average output current of the second active bridge with respect to the external phase shift angle, the dead time, and the load impedance — S313

Determining, based on the third formula, a fourth functional relationship formula of the external phase shift angle with respect to the dead time and the voltage gain when an upper switch transistor of a first phase bridge arm of the second active bridge is turned on and when a current of the resonant cavity is less than 0 — S14

Substituting the fifth formula into the fourth formula to obtain the functional relationship formula of the current effective value for the resonant cavity with respect to the external phase shift angle, the voltage gain, and the dead time — S314

Determining a second boundary range of the external phase shift angle based on the third functional relationship formula and the fourth functional relationship formula — S15

Determining a first boundary range of the external phase shift angle based on the functional relationship formula of the current effective value for the resonant cavity with respect to the external phase shift angle — S4

Determining a third boundary range of the external phase shift angle based on an intersection of the first boundary range and the second boundary range — S16

Outputting the first drive signal and the second drive signal according to the third boundary range of the external phase shift angle — S17

FIG. 13

FIG. 14

```
┌─────────────────────────────────────────────────────────────┐
│ Calculating an input voltage of the second active bridge to  │── S1
│ form a first formula of the input voltage of the second      │
│ active bridge with respect to an external phase shift angle   │
└─────────────────────────────────────────────────────────────┘
                              ↓
┌─────────────────────────────────────────────────────────────┐
│ Calculating an output voltage of the first active bridge to  │── S2
│ form a second formula                                        │
└─────────────────────────────────────────────────────────────┘
                              ↓
┌─────────────────────────────────────────────────────────────┐
│ Obtaining, based on the first formula and the second formula,│── S3
│ a functional relationship formula of a current effective     │
│ value for the resonant cavity with respect to the external   │
│ phase shift angle                                            │
└─────────────────────────────────────────────────────────────┘
                              ↓
┌─────────────────────────────────────────────────────────────┐
│ Determining a first boundary range of the external phase     │── S4
│ shift angle based on the functional relationship formula of  │
│ the current effective value for the resonant cavity with     │
│ respect to the external phase shift angle                    │
└─────────────────────────────────────────────────────────────┘
                              ↓
┌─────────────────────────────────────────────────────────────┐
│ Outputting the first drive signal and the second drive       │── S5
│ signal according to the first boundary range of the external │
│ phase shift angle                                            │
└─────────────────────────────────────────────────────────────┘
                              ↓
┌─────────────────────────────────────────────────────────────┐
│ Acquiring an output current of the dual active bridge        │── S18
│ converter                                                    │
└─────────────────────────────────────────────────────────────┘
                              ↓
┌─────────────────────────────────────────────────────────────┐
│ Calculating a current difference between a current reference │── S19
│ value and the output current of the dual active bridge       │
│ converter                                                    │
└─────────────────────────────────────────────────────────────┘
                              ↓
┌─────────────────────────────────────────────────────────────┐
│ Generating a compensation signal based on the current        │── S20
│ difference                                                   │
└─────────────────────────────────────────────────────────────┘
                              ↓
┌─────────────────────────────────────────────────────────────┐
│ Adjusting the first drive signal and the second drive signal │── S21
│ based on the compensation signal                             │
└─────────────────────────────────────────────────────────────┘
```

FIG.15

Europäisches Patentamt

European Patent Office

Office européen des brevets

# EUROPEAN SEARCH REPORT

**Application Number**

EP 25 15 6289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENG JUNYUN ET AL: "Hybrid Modulated Bidirectional Resonant DC/DC Converter for High-Voltage Bus-Based Energy Storage Systems", 2019 IEEE ENERGY CONVERSION CONGRESS AND EXPOSITION (ECCE), IEEE, 29 September 2019 (2019-09-29), pages 4256-4261, XP033667042, DOI: 10.1109/ECCE.2019.8913264 [retrieved on 2019-11-25] * Chapter II; figures 1-7 * | 1-13 | INV.<br>H02M1/00<br>H02M1/38<br>H02M3/00<br>H02M3/335 |
|  | - - - - - |  | |
|  |  |  | TECHNICAL FIELDS SEARCHED (IPC)<br><br>H02M |

The present search report has been drawn up for all claims

| Place of search | Date of completion of the search | Examiner |
|---|---|---|
| The Hague | 30 June 2025 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)